# EUROPEAN PATENT SPECIFICATION

(11) **EP 2 675 585 B1**
(45) Date of publication and mention of the grant of the patent: **09.08.2017**
(21) Application number: 12703316.5
(22) Date of filing: 10.02.2012
(51) Int. Cl.: B23K 11/12, B23K 20/02, B23K 20/04, B23K 20/233, B23K 31/02, B23K 35/02, B23K 35/32, B32B 15/01, C22C 5/04

(54) **METHOD OF PRODUCING A WELDED ARTICLE OF DISPERSION STRENGTHENED PLATINUM BASED ALLOY WITH TWO STEPS OF WELDING**
VERFAHREN ZUR HERSTELLUNG EINES GESCHWEISSTEN ARTIKELS AUS ODS PLATINUM MIT EINEM ZWEI SCHRITTE-SCHWEISSVERFAHREN
PROCÉDÉ DE FABRICATION PAR SOUDAGE D'UN OBJET EN PLATINE AYANT DES OXIDES DISPERSÉS DE RENFORCEMENT AVEC UN SOUDAGE EN DEUX ÉTAPES

(30) Priority: 14.02.2011 EP 11154300
(43) Date of publication of application: 25.12.2013
(73) Proprietor: UMICORE AG & CO. KG, 63457 Hanau-Wolfgang (DE)
(72) Inventor: SINGER, Rudolf, 55270 Engelstadt (DE); ZEUNER, Stefan, 61352 Bad Homburg v.dH. (DE); WEBER, Bernd, 63517 Rodenbach (DE); KOPATZ, Joerg, 63589 Linsengericht-Eidengesäß (DE)
(74) Representative: Morariu Radu, Mihai Dorin
(86) International application number: PCT/EP2012/052309
(87) International publication number: WO 2012/110421

(56) References cited:
- DE-A1- 10 237 763
- JP-A- 2 179 370
- JP-A- 5 277 761
- US-A- 4 525 433
- US-B1- 7 150 389

## Description

### BACKGROUND OF THE INVENTION

### 1. Field of the Invention

The present invention relates to dispersion strengthened platinum-base alloys, and more particularly to a process of producing a welded article of dispersion strengthened platinum base alloy sheet metal material according to the preamble of claim 1 (see, for example, US4 525 433 A).

### 2. Description of the Prior Art

Structural parts consisting of precious metal and precious metal alloys, such as preferably PGM materials, are used in the glass industry, particularly in plants for the melting and hot-forming of special glass. These plant components used in fusion technology, also called PGM (Platinum Group Metals) products, serve for melting, refining, transporting, homogenizing and apportioning the liquid glass. These precious metal alloys are mostly platinum-base alloys with alloying additions of rhodium, iridium or gold. If very high structural part strengths are required owing to mechanical and/or thermal stresses imposed by the glass melt, oxide dispersion strengthened platinum-base alloys are increasingly used, since these are characterized by a higher ability to withstand thermal, mechanical and chemical stresses than standard alloys. Oxide-dispersed alloys, also referred to as ODS alloys hereinbelow, are distinguished by a very homogeneous microstructure.

Plant parts carrying glass melt are often precious metal sheet structures which are designed as thin-walled pipe systems. The molten glass flows through these at temperatures of between 1000°C and 1700°C.

On account of their high melting point, PGM (Platinum Group Metals) materials are distinguished by high temperature resistance and, furthermore, by high mechanical strength and resistance to abrasion, and are therefore especially suitable for the production of structural parts in plants or plant parts which come into contact with the glass melt. Suitable materials are platinum and alloys of platinum and/or other PGM metals, which may optionally also contain minor amounts of base metals as further alloying components or oxidic additives. Typical materials are refined platinum, platinum-rhodium alloys and platinum-iridium alloys, which contain a small amount of finely distributed refractory metal oxide, such as in particular zirconium dioxide or yttrium oxide, to increase the strength and high-temperature creep resistance.

In addition to the selection of the suitable material, however, the production, in particular shaping, of the precious metal components also plays a significant role in determining the strength. As a rule, these components are joined together from individual metal sheets in order to provide the required geometry, and are usually connected to one another by fusion welding. In this process, the joints between the metal sheets to be connected to one another and, if appropriate, a filler material of the same type are converted into the molten state by the supply of heat and fused together. In this case, the heat of fusion can be produced by an electric arc or an ignited gas-oxygen mixture. However, if components joined in this way are exposed to very high temperatures, for example above 1200°C, the welded seam often forms the weak point of the overall material bond. Causes that have been determined are inhomogeneities in the welded seam and changes to the microstructure in the heat-affected zone. Particularly longitudinal welded seams in cylindrical structural parts, for example pipes, are at particular risk owing to the acting stresses which are almost twice as high compared with circumferential welded seams, and therefore these longitudinal welded seams often fail and tear apart. When using known welding processes, for example tungsten inert gas (TIG) welding, plasma welding, laser or autogenous welding, the alloy is melted. Whereas only very minor losses in strength can be observed in the welded seam when melting classic substitutional solid solution alloys as a result of recrystallization during use above 1200°C, the melting when welding oxide dispersion strengthened alloys leads to the coagulation and floating of a majority of the dispersoids, typically of ZrO₂ and/or Y₂O₃, in the melt. A coarse-grained solidification microstructure is formed in the welded seam. The strengthening action of the dispersoids in the welded seam is thus nullified. The ability of a component joined together in this way to withstand stresses, and the service life thereof, are then reduced to the level of components joined from standard alloys.

Measures for preventing this disadvantage are known from JP 5212577 A and EP 0320877 B1. In the processes disclosed therein, a fusion-welded seam on ODS metal sheets is subsequently covered with a Pt-ODS foil and pressed into the seam by hammering at high temperatures. This measure increases the fineness of the grain size distribution of the welded seam through the foil and consequently reduces the probability of crack formation on the surface. In addition to further obsolete alternatives, recourse has been made to integral connections formed by means of hammer-welded seams. However, connections of this type are subjected to very great variations in quality. To eliminate these variations, an extremely great expenditure for the preparation of the welded seam and very exact control of the process parameters during the welding are required. In the case of this process, uniform heating of the two materials to be joined, in particular metal sheets, during hammering proves to be difficult. When doing so, it is often scarcely possible to heat the lower metal sheet in the welding position adequately with the torch to achieve a good adhesive effect during the hammering. The process is consequently very laborious, does not necessarily lead to an optimum result and is very expensive. Furthermore, there is a fundamental problem when fabricating hammer-welded seams, in that there is a low adhesive tendency of the material during the hammering in the case of alloys with a rhodium content > 4% by weight and in general in the case of ODS alloys. The oxides already present in the ODS material and/or the oxides forming during the hammering, mainly rhodium oxide, significantly reduce the adhesive bonding of the two structural parts, in particular metal sheets. The poor adhesive bonding has the effect of increasing the production expenditure considerably, but also at the same time of increasing the risk of no adequate bond being achieved any longer in certain regions of the joining region in the seam.

In DE 10237763 B4, during the production of permanent integral connections of structural parts of oxide-dispersed (ODS) metallic materials, the welding of the individual materials is respectively performed below their melting temperature, with at least partial formation of a diffusion bond in the joining region. In a second process step, the diffusion bond, preferably the entire joining region, is heated to a temperature which is likewise below the melting temperature of the materials and/or structural parts to be connected to one another and, at this temperature, is mechanically recompacted, preferably hammered. Depending on the arrangement in relation to one another before the welding operation, the two materials to be connected to one another in this case define the joins, the latter generally also forming the joining region, i.e. the region in which the desired connection between the two is to be produced. In this process, a permanent integral connection of structural parts of oxide-dispersed (ODS) metallic materials is consequently provided by arranging for the production of a diffusion-welded bond to be performed before the mechanical recompaction under heat. A preferred embodiment provides for the use of a weld filler. This is arranged in the joining region between the two materials and/or structural parts of oxide-dispersed metallic materials to be connected to one another. Here, the weld filler can be in the form of a separate element or else in the form of a coating on at least one of the joining faces which face one another in the joining region. Suitable weld fillers in this case are, in particular, ductile fused alloys, for example PtAu5, PtIr1, pure Pt, but also more solid alloys, for example PtRh5, PtRh10, PtIr3. Said document emphasizes that the weld filler makes it possible to achieve a significantly improved bond between the two materials to be connected to one another, since the adhesive tendency between the two materials is increased considerably, and this in turn reduces the production expenditure considerably. In addition, the ability of the joining zones to withstand thermal and mechanical stresses should be increased considerably. Furthermore, said document emphasizes that the insertion of a precious metal foil is preferred above all. In a preferred embodiment this document teaches that the edges of the metal sheets to be connected are chamfered, placed above each other with the chamfered edges exactly on each other and, in a frost step, are first connected provisionally with a diffusion bond that is recompacted mechanically to effect the final diffusion bond in a subsequent step.

It is a disadvantage that the chamfered portions of the edges are faced toward each other and overlapped exactly, which will either result in a diffusion bond being thinner than the other metal sheet, or a less intense diffusion bond, which both results in a lower strength of the bond, in particular when mechanical load is applied. In addition, the use of weld fillers or foils of a different composition than the metal sheets to be connected is disadvantageous because the resulting Kirkendall-Effect will cause pore formation weakening the weld connection between the edges.

US4525433 also discloses a welding method. In this welding method edges of sheets to be welded are fused-welded, the sheets are then compression welded by hot rolling, after which the fused-welded edges are removed.

### SUMMARY OF THE INVENTION

The invention is based on the object of providing an improved process for connecting oxide-dispersed precious metal sheets and a device for carrying out this process

SHORT DESCRIPTION OF THE INVENTION

The present invention concerns a process of producing a welded article of dispersion strengthened platinum base alloy sheet material as defined in claim 1. Further embodiments of the method according to the present invention are defined in the dependent claims 2 to 13.

### BRIEF DESCRIPTION OF THE DRAWINGS

The invention will be more fully understood and further advantages will become apparent when reference is made to the following detailed description and the accompanying drawings, in which:
FIG. 1 is a drawing showing the sheet material with chamfered edges being placed on a support;
FIG. 2a and 2b is a drawing showing a sheet material being arranged to a tubular article after the melt welding step.

### DETAILED DESCRIPTION OF THE INVENTION

The present invention provides a process for welding of a dispersion strengthened platinum base alloy. The melt welding practice of the present invention is such that the formation of coarse brittle intermetallics characteristic of prior art processes and whose formation severely reduces the joint strength and ductility of the weldment when compared to the base metal are significantly reduced or eliminated.

The weld can be shot peened to homogenize the weldment and heat affected zone. In accordance with the present invention, dispersion strengthened platinum base alloys are welded in an economical, efficient manner, and the useful mechanical properties thereof are retained.

In one aspect of the present invention a weld is produced from a dispersion strengthened platinum base alloy sheet material. Specifically, the alloy is welded by a process as defined in claim 1, and comprising the steps of:
- providing at least one piece of dispersion strengthened platinum base alloy sheet material;
- overlapping the edges to be weld connected;
- melt welding of the overlapped, edges of said dispersion strengthened platinum base alloy only at the periphery of said edges;
- weld connecting the platinum sheet material by a compression welding method to produce the weld;
- removing the melt welded portions on the periphery of the welded article, the melt welding step being TIG (Tungsten Inert Gas) welding, whereby the TIG welding comprises the steps of : a. adjusting TIG welding power to minimize energy input into the weld; b. contacting said weld with an arc gas composition adapted to maximize rapid quenching of the weld; c. contacting said weld with a second gas, the contact being predominantly at the undersurface thereof, so that the undersurface of the weld is quenched; and d. contacting said weld with a trailing gas to enhance cooling of the weld beyond that achieved by the arc gas and the second gas.

Compression welding methods include hammer welding, shot peening, roller seam-welding, resistance welding, diffusion welding, friction welding and combinations thereof.

Suitable dispersion strengthened platinum base alloy sheet material can be provided as described in, for example, EP 0320877, US-B-6511523 or EP 1781830. In one embodiment of the invention, the platinum base alloy forming the platinum sheet material has a composition consisting essentially of platinum together with gold, iridium or rhodium, in particular alloys selected from the group consisting of PtAu5, PtIr1, PtRh5, PtRh10, PtRh20, Ptlr3, PtIr5, pure platinum and combinations thereof. In another embodiment, the platinum base alloy can be oxide dispersed strengthened, more specifically with an oxide from the group consisting of yttrium oxide, zirconium dioxide and mixtures thereof. This is described in the patent documents cited above in this respect. Such an oxide dispersed strengthening can both be present in pure platinum as well as the with the alloys disclosed in this section above, depending on the required material properties. More specifically, the platinum base alloy has a composition of PtAu5, PtIr1, PtRh5, PtRh10, Ptlr3, PtIr5 or is pure platinum and is oxide-dispersed either with yttrium oxide or zirconium dioxide.

The edges are subsequently overlapped. In yet another embodiment of the invention the edges to be connected belong to the same platinum base alloy material sheet, thus the platinum material sheet has to be bent in order to allow the edges to be overlapped so the welded article will be a tubular article. The cross section of the tubular welded article is not particularly limited and can, for example, be circular, oval or polygonal.

The metal sheet portions are preferably arranged so as to overlap with an overlap length which is 2.5 to 7.5 times an original metal sheet thickness (t₀), preferably 4 to 7 times the original metal sheet thickness (t₀). After the diffusion welding, the overlap of the metal sheet portions is 3 to 8 times an original metal sheet thickness (t₀), preferably 5 to 7 times the original metal sheet thickness (t₀).

The overlapped edges are subsequently melt welded at the periphery of said edges. During melt welding, the dispersoids may coagulate and the strengthening action of the dispersoids in the welded seam will be thus nullified or at least limited. Since the melt welded portions will be cut off later in the process, the properties of the final product will not be affected. In principle, the method used for the melt welding is not limited to a particular method as long as the energy input into the platinum sheet material is limited so that the melting and coagulation of dispersoid is spatially limited to the areas where the melt welded connection is being made.

The melt welding at the periphery of said edges may be carried out only at one of the sides of the platinum sheet material, or at both sides of the platinum sheet material.

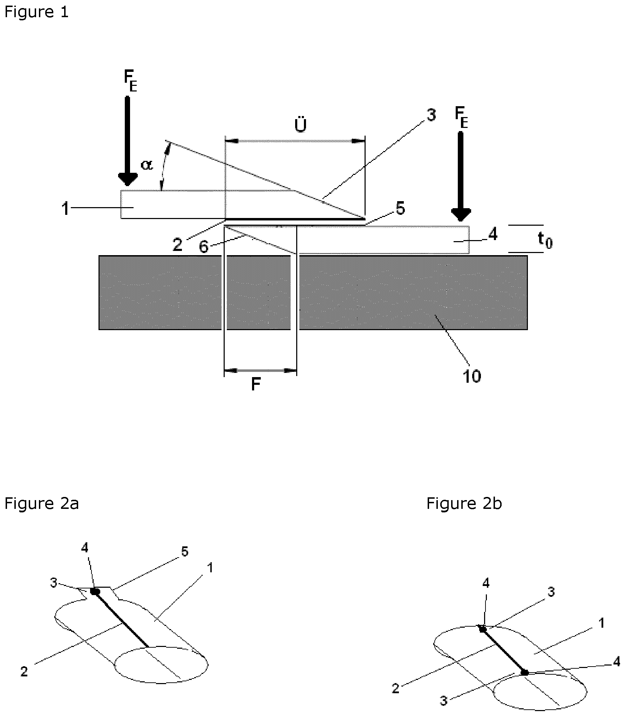

Obviously the weld connection will be placed on the overlapped edges so the overlapped edges are weld connected at this specific location. Usually, the melt welded connection does not need to be of a large dimension and a single weld point will suffice. The weld connection will be placed at the periphery of the edges to be connected, that is close to the side boundary of the platinum sheet material as depicted in Figures 2a and 2b.

In yet another embodiment of the invention the edges to be connected to each other are overlapped over their entire length and at both side boundaries of the platinum sheet material melt welding is carried out and melt welded connections are established.

In this embodiment the edges that are to be connected to each other are overlapped over a part of their length and are melt weld connected at one of the side boundaries of the platinum sheet material. In this embodiment, the edges of the platinum sheet material are usually overlapped at one side boundary of the platinum sheet material and weld connected close to the side boundary while the edges apart from each other are at a greated distance from this respective side boundary. In this case, both edges usually are spaced apart forming a V-shaped gap between the edges and overlapped and partially melt weld connected at one side boundary end of the gap while no overlap or melt weld connection is present on the opposite side boundary. In yet another embodiment of the invention the edges to be connected to each other are overlapped over a part of their length or their entire length and the periphery of the platinum sheet material where the melt weld connection is carried out is placed on a section extending over the side boundaries of the remaining platinum sheet material. In other words, at the edges to be connected the platinum sheet material is wider than the intended width of the rest of the welded article, so that a terminal ear is being formed that only saves the purpose of placing the melt weld connection spatially separate from the portion of the edges to be connected and being cut off after carrying out the compression welding step. In this way the amount of platinum sheet material being cut off and recycled and at the same time the worktime and effort to be used for this step can be minimized. Such a situation is depicted in Fig. 2a.

Examples of TIG welding power supplies that minimize the energy input into the weld include but are not limited to those utilizing inverter technology that produces pulsed AC waveforms that increase response speed. The pulsed inverter power supplies produce a highly stable arc, with minimum current, that is maintained by square-wave AC pulses that are completely different from conventional alternating current. This type of arc is advantageous for the welding of thin platinum sheets, which process is usually difficult, and it allows high speed welding. Also the pulsed inverters produce a more concentrated arc which allows greater precision of the energy input into the weld. This characteristic is critical to controlling the rapidly solidified nature of the weld. This is accomplished because the high speed pulses, from 10 to 500 Hz converges the arc to a very fine point while, at the same time, the stability of the arc is increased. Finally, the high pulse rates enhance the cleaning of the electrode allowing the reverse or cleaning cycle of the weld to be reduced. This again decreases the amount of energy input into the system.

The purpose of controlling the arc gas mixture and various gas mixtures not only to the welding arc, but to the underside of the weld and directly to the weld itself act to enhance the cooling rate of the weld so that a rapidly solidified structure can be achieved in the weld. The types of fixtures and gas nozzles used to shield both the front and back of the weld are varied and depend on the configuration of the component to be welded and the type of joint that is to be formed. The arc gas composition is either argon or helium or a mixture of the two. The cover gas (trailing gas) used to protect and quench the underside of the weld is either argon, nitrogen, helium or carbon dioxide or some combination of two or more of these gases. To increase the quench rate of the fixture, the fixture itself may be cooled. The cover gas applied by the trailing gas nozzle is either argon, nitrogen, helium or carbon dioxide or some combination of two or more of these gases. The gas nozzle can be in physical contact with the weldment, thereby quenching the weldment by conduction.

TIG welding is desirable by industry because of its ease of application and wide spread deployment. The TIG welding is thus performed by utilizing a TIG power supply that minimizes the energy necessary for welding, employing an optimum combination of shielding gases that will cool the weld as quickly as possible, and properly fixturing the joint so that a quenching gas is applied predominantly to the underside of the weld at a point immediately trailing the weld. Preferably a pulsed AC inverter power supply is utilized because of its ability to form a condensed arc at high pulse rates thereby reducing the energy needed for welding. The arc and shielding gases are preferably selected from the group consisting of helium, argon or a mixture thereof that provides the required maximum quench rates. Fixturing and trailer nozzles are utilized to optimize ease of welding, and their placement and design will vary, depending on the weld configuration and component geometry. Typical quenching and shielding gases are selected from the group consisting of argon, helium, nitrogen, carbon dioxide and mixtures thereof.

Subsequently, the platinum sheet material is, according to the present invention, weld connected by a compression welding method to produce the weld.

These welding methods are cold working methods that are carried out below the melting temperature of the platinum sheet material and are familiar to the artisan aho will be able to achieve optimal results after few trials. Nonetheless, it is preferred to carry out these methods at temperatures above room temperature, but below the melting temperature. This compression welding operation is can be carried out at a temperature of about 1000°C to about 1700°C, more specifically a temperature of about 1200°C to about 1300°C or of about 1400°C to about 1600°C. Further preferably, the metal sheet portions are roughened on the mutually facing sides before they are arranged so as to overlap, preferably with a surface roughness Rₐ of about 0.05 to about 25 µm, and further preferably of about 0.5 to about 10 µm. This roughness may already be provided during chamfering by severing with defined cutting edges, or else by subsequent surface machining by severing with undefined cutting edges, for example grinding. Roughening makes it possible to provide an enlarged surface area in the region of the diffusion welding, and/or makes improved controllability of the welding parameters possible. Suitable heating means is, for example, a gas-oxygen torch. The metal sheet portions can be heated locally, although heating over the entire range to be compression welded is possible but often not economic. As for friction welding, in particular friction stir welding is a suitable method for connecting the platinum sheet material.

Resistance welding provides heating of the edges to be connected by means of passing an electrical current through the edges of the platinum sheet material to be connected. In roller seam welding a roller is passed along the edges to be connected, compressing the overlapping edges of platinum sheet material and thus forming a diffusion bond. At the same time an electrical current can be passed through the roller to effect heating of the platinum sheet material. The roller may be sufficiently broad so that the edges to be connected are compressed throughout their entire width, but may also be more narrow. In order to achieve a compression weld connection substantially as thick as the thickness of the platinum sheet material, a subsequent step such as shot peening or hammer welding would be required. Hammer welding should be carried out at the temperatures mentioned above and can easily being done with placing the edges to be connected on an anvil, heating loacally (e.g. with a gas torch) and hammering the edges to be connected to form the diffusion bond.

Shot peening is a cold working process in which the surface of a component which may include a weld is bombarded with small spherical media called shot. The shot may be for example glass beads, ceramic spheres or steel shot. Benefits, such as markedly improved fatigue life, obtained by shot peening are the results of the effects of the residual compressive stresses and the cold working induced.

The weld is shot peened using either glass beads, ceramic spheres or steel shot. For the platinum sheet material glass beads are specifically useful.

The conditions under which shot peening of the weld is carried out will vary depending on the quality of the shot selected, the impact intensity of the shot and the coverage of the work piece during peening. Peening media must be uniform in size and essentially spherical in shape with no sharp edges or broken particles. The impact intensity is determined by the hardness change in a calibration strip that accompanies the shot peening of the desired sample. The selection of the proper shot peening intensity will depend on the particular specimen, geometry and material. Coverage control is the extent to which the specimen surface is impacted during shot peening. Full coverage is obtained when the original surface of the weld material is obliterated entirely by overlapping peening dimples. Typically the shot consists of substantially uniform, essentially spherical particles having an average diameter ranging from about 0.1 mm to 5 mm. Peening can be carried out for a time period ranging from about 5-60 sec/cm², or until the calibration strip exhibits an arc height (or bend) ranging from 0.15 mm to 0.6 mm and substantially full coverage is obtained. Percent coverage after the n cycles ("Cn ") equals 1-(1-C1)", where "n" is the number of cycles and "C1" is the percent coverage after the first cycle. Generally the number of cycles required to obtain substantially full coverage ranges from 1 to 10. Obviously, for these compression welding methods a force for welding will be applied from one side of the edges to be connected so there must be some base on the opposite side of the platinum sheet material, such as an anvil. There are no particular limitations to the support in general other than being suitable for the respective compression welding operations and capability of withstanding the mechanical forces and temperatures associated therewith. Usually, steel (like e.g. RGM 17 steel) with a tensile strength of about 800 N/mm² to about 1100 N/mm² is suitable. In the case of roller seam welding, the base bay be a second roller arranged opposite to a first roller at the other side of the edges to be connected of the platinum sheet material. In another embodiment of the invention the compression welding method is carried out on a base that has been preheated and wherein at least one platinum metal sheet portion is resting on the base. More specifically, the base is preheated to 300 to 600°C, in particular 350 to 550°C, or 400 to 500°C. Such a preheating is favourable in order to carry out the compression welding at an elevated temperature to avoid the base having the effect of a heat sink.

To avoid warping of the platinum sheet material and the welded article it might be useful to follow a certain working schedule. Consequently, in yet another embodiment of the invention the compression welding is carried out from one side of the sheet material at the melt welded portion of the overlapping edges and continued along the overlapping edges to the opposite side of the sheet material. Alternatively, the compression welding is carried out from a distance at about midway between the two sides of the sheet material and continued along the overlapping edges to one side of the sheet material and subsequently from said distance at about midway to the opposite side of the sheet material. Some working schedules might be more useful in certain situations than others, but the artisan will be able to find out the optimum schedule for the respective purpose by a few trials.

In a particular embodiment of the invention the edges to be connected to each other are overlapped over their entire length and at both side boundaries of the platinum sheet material melt welding is carried out and melt welded connections are established, and the compression welding is carried out from a distance at about midway between the two sides of the sheet material and continued along the overlapping edges to one side of the sheet material and subsequently from said distance at about midway to the opposite side of the sheet material.

In yet another embodiment of the invention the edges to be connected to each other are overlapped over a part of their length and are melt weld connected at one of the side boundaries of the platinum sheet material. In this embodiment, the edges of the platinum sheet material are usually overlapped at one side boundary of the platinum sheet material and weld connected close to the side boundary while the edges are at a greater distance between each other further apart from this respective side boundary. In this case, both edges usually are spaced apart forming a V-shaped gap between the edges and overlapped and partially melt weld connected at one side boundary end of the gap while no overlap or melt weld connection is present on the opposite side boundary and the compression welding is carried out from one side of the sheet material at the melt welded portion of the overlapping edges and continued along the overlapping edges to the opposite side of the sheet material. In this way, the V-shaped gap will subsequently narrow during the compression welding and finally close the gap. These description of mechanical working schedules are particularly suitable for the employment of shot peening and/or hammer welding as compression welding methods, but can be used with other methods as well. The respective compression welding steps may be repeated, as mentioned above for shot peening where usually 1 to 10 passes are employed. The same can also be done e.g. with hammer welding or roller seam welding, if necessary.
The compression welding methods may also be employed in combination; for example, first a roller seam welding may be used for preliminary connecting the edges, then shot peening the edges to be connected in order to reduce the thickness and effect diffusion bonding and then hammer welding in order to achieve an improvement of the surface structure. Also, first shot peening followed by hammer welding or vice versa can be employed for specific purposes.
After the compression welding step, the melt welded portions on the periphery of the welded article is removed. This can be effected by cutting off, with metal shears, a cutting wheel, wire eroding, jet cutting, laser cutting or combinations thereof. Optionally, the edge created by the removing step can be smoothened, ground or worked in another way to remove sharp edges or achieve a desired surface structure.

The invention also provides for additional after-treatment steps that can either be carried out after removal of the melt welded portions or after compression welding, but before removing the melt welded portions. Such after-treatment steps are described as follows.
After the compression welding, the seam produced by the compression welding is subjected to cold- or hot-forming, in order to smooth the seam and/or reduce its thickness. In this process, the thickness is preferably reduced to 0.9 to 1.2 times the original metal sheet thickness (t₀), and further preferably to about the original metal sheet thickness (t₀). The seam can then also be provided with a surface finish by grinding down and polishing the seam - if appropriate together with the entire surface - in order to obtain a uniform surface quality.
In an additional, optional after-treatment step, the compression welding is followed by heat treatment ("stress-relief annealing") at a temperature of about 900°C to about 1400°C, and preferably of about 1000°C to about 1200°C.
Furthermore, according to the invention, the overlapping arrangement involves arranging the metal sheet portions preferably directly one above/below another. Therefore, no weld fillers and/or foils are provided between the metal sheet portions. According to the invention, also no bandage is used, that means no additional tube section or metal sheet will be blaced above or below the overlapping portions of the matel sheets are placed that will be introduced into the diffusion bond between the edges to be connected, as is e.g. shown in Figure 1 of DE 1527299. It has been found that the present invention nevertheless yields better creep rupture strengths than the prior art.

It has been discovered that dispersion strengthened platinum base alloys upon being subjected to the welding techniques set forth above develop microstructures in the weldments that are substantially equivalent to the base metal and achieve excellent mechanical properties that are equivalent to the base platinum sheet material. The process is preferably controlled in such a manner that, after the cold- or hot-forming, the seam has a width of about 5 to about 10 times an original metal sheet thickness (t₀), and further preferably of about 6 to about 7 times the original metal sheet thickness (t₀). According to the invention, in a metallurgical microsection no differences can be ascertained between the seam obtained by the process according to the invention and the adjacent metal sheet portions which have no seam. Consequently, the present invention also relates to a welded article of dispersion strengthened platinum base alloy sheet material obtainable by a method of the invention.

This invention is further described herein, but is not limited by the examples given below. In all examples the test samples were fabricated from dispersion strengthened alloys comprising platinum, and prepared from rapidly solidified powders by the compaction and fabrication techniques described above. The specific techniques, conditions, materials, proportions and reported data set forth to illustrate the principles of the invention are exemplary and should not be construed as limiting the scope of the invention, as defined in the appended claims.

### DETAILED DESCRIPTION OF THE DRAWINGS

In Fig. 1, the two metal sheet portions, a first metal sheet portion 1 and a second metal sheet portion 4, can be seen, and these have an identical or at least very similar metal sheet thickness to. These thicknesses may also differ from one another. Both ends of the metal sheet portions are chamfered in a straight manner outwards, i.e. on that side which faces away from the respective adjacent metal sheet portion, and therefore chamfers 3 and 6 are formed at a chamfer angle α, the chamfer width being denoted by F, aspect not covered by the present invention. These chamfers are thus oriented in such a manner that, in the state in which they are not joined, the two metal sheet portions are not in a plane or not substantially in a plane. In an overlap region with an overlap width U, the respective contact portions 2 and 5 to be subsequently contacted of the two metal sheet portions lie opposite one another, it being possible to roughen these contact portions. The overlap width U is always greater than the chamfer width F.

In this figure, the second metal sheet portion 4 rests on a base 10, such as an anvil, which has already been heated or is still to be heated. In this case, the heat should be transferred from the base initially to the second metal sheet portion 4 and, if appropriate, also to the first metal sheet portion 1. If part of the first metal sheet portion 1 also rests on the base 10, heat is also directly transferred. Both metal sheet portions 1 can 4 be clamped by an aligning device (not shown) with a clamping force F_{E}. The aligning devices are generally only connected to the base 10 indirectly via the clamped metal sheet portions. Purpose of these aligning devices merely is to hold the metal part(s) to be connected to the base 10, but not to hold both metal sheet portions 1 and 4 together since this is effected by the melt welded connection

Fig. 2a and 2b show that a metal sheet 1 is bent to form a tubular shaped article. The chamfered edges are arranged upon each other 2 and at the periphery of said metal sheet 3 the edges are connected to each other with one or two melt weld connections 4. In Fig. 2a the periphery of the metal sheet 3 and the melt weld connection 4 is located at a terminal ear 5 that only serves this purpose and that is employed to minimize metal loss when the terminal ear 5 is cut off after compression welding. Note that in both 2a and 2b the melt welded connections are close to the side boundary of the platinum sheet metal.

## Claims

1. A process of producing a welded article of dispersion strengthened platinum base alloy sheet material comprising the steps of
- providing at least one piece (1, 4) of dispersion strengthened platinum base alloy sheet material;
- overlapping the edges to be weld connected;
- melt welding of the overlapped edges of said dispersion strengthened platinum base alloy only at the periphery of said edges;
- weld connecting the platinum sheet material by a compression welding method, to produce the weld;
- removing the melt welded portions on the periphery of the welded article,
**characterized in that** the melt welding step is TIG welding (Tungsten Inertgas Welding), the TIG welding comprising the steps of: a. adjusting TIG welding power to minimize energy input into the weld; b. contacting said weld with an arc gas composition to maximize rapid quenching of the weld; c. contacting said weld with a second gas, the contact being predominantly at the undersurface of said weld, so that the undersurface of the weld is quenched; d. contacting said weld with a trailing gas to enhance cooling of the weld beyond that achieved by said arc gas and said second gas.

2. The process of claim 1, the welded article being a tubular article and the edges to be connected are belonging to the same platinum base alloy material sheet (1).

3. The process of any of the previous claims, wherein said platinum base alloy has a composition consisting essentially gold, iridium or rhodium, in particular alloys selected from the group consisting of PtAu5, PtIr1, PtRh5, PtRh10, PtRh20, Ptlr3, Ptlr5 pure platinum and combinations thereof.

4. The process of any of the previous claims, the platinum base alloy being oxide dispersed strengthened with an oxide from the group consisting of yttrium oxide, zirconium dioxide and mixtures thereof.

5. The process of any of the previous claims, wherein the removing of the melt-welded portions is effected by cutting off, metal shears, cutting wheel, wire eroding, jet cutting, laser cutting or combinations thereof.

6. The process of any of the previous claims, wherein said shot peening medium is selected from the group consisting of glass beads, ceramic spheres or steel shot.

7. The process of any of the previous claims, wherein said shot peening step is carried out for a time period ranging from about 5 to 60 sec/cm².

8. The process of any of the previous claims, wherein said melt welding at the periphery of said edges is carried out only at one of the sides of the sheet material.

9. The process of any of the previous claims, wherein the weld connecting by a compression welding method is carried out on a base (10) that has been preheated and wherein at least one metal sheet portion (1, 4) is resting on the base (10).

10. The process of claim 9, wherein the base (10) is preheated to 300 to 600°C, preferably 350 to 550°C, further preferably to 400 to 500°C.

11. The process of any of the previous claims, wherein the compression welding is carried out from one side of the sheet material at the melt welded portion of the overlapping edges and continued along the edges to the opposite side of the sheet material.

12. The process of any of the previous claims, wherein the compression welding is carried out from a distance at about midway between the two sides of the sheet material and continued along the overlapping edges to one side of the sheet material and subsequently from said distance at about midway to the opposite side of the sheet material.

## Patentansprüche

1. Verfahren zum Herstellen eines geschweißten Artikels aus Flächenmaterial aus dispersionsgehärteter platinbasierter Legierung, das die folgenden Schritte umfasst
- Bereitstellen von mindestens einem Stück (1, 4) Flächenmaterial aus dispersionsgehärteter platinbasierter Legierung;
- Überlappen der Ränder, die zusammengeschweißt werden sollen;
- Schmelzschweißen der überlappten Ränder der dispersionsgehärteten platinbasierten Legierung nur am Umfang der Ränder;
- Schweißverbinden des Platin-Flächenmaterials durch ein Pressschweißverfahren, um die Schweißung zu bilden;
- Entfernen der schmelzgeschweißten Abschnitte am Umfang des geschweißten Artikels,
**dadurch gekennzeichnet, dass** der Schmelzschweißschritt ein TIG-Schweißen (Wolfram-Inertgas-Schweißen) ist, wobei das TIG-Schweißen die folgenden Schritte umfasst: a. Einstellen der TIG-Schweißleistung, um den Energieeintrag in das Schweißen zu minimieren; b. Inkontaktbringen der Schweißung mit einer Bogengaszusammensetzung, um ein schnelles Quenchen der Schweißung zu maximieren; c. Inkontaktbringen der Schweißung mit einem zweiten Gas, wobei der Kontakt vorwiegend an der Unterseite der Schweißung besteht, so dass die Unterseite der Schweißung gequencht wird; d. Inkontaktbringen der Schweißung mit einem nachlaufenden Gas, um die Kühlung der Schweißung über die durch das Bogengas und das zweite Gas erreichte hinaus zu verstärken.

2. Verfahren gemäß Anspruch 1, wobei der geschweißte Artikel ein röhrenförmiger Artikel ist und die zu verbindenden Ränder zu derselben Materiallage aus platinbasierter Legierung (1) gehören.

3. Verfahren gemäß einem der vorstehenden Ansprüche, wobei die platinbasierte Legierung eine Zusammensetzung aufweist, die im Wesentlichen aus Gold, Iridium oder Rhodium besteht, insbesondere Legierungen, die ausgewählt sind aus der Gruppe bestehend aus PtAu5, Ptlr1, PtRh5, PtRh10, PtRh20, Ptlr3, Ptlr5, reinem Platin und Kombinationen davon.

4. Verfahren gemäß einem der vorstehenden Ansprüche, wobei die platinbasierte Legierung mit einem Oxid aus der Gruppe bestehend aus Yttriumoxid, Zirconiumdioxid und Mischungen davon, oxiddispersionsgehärtet wird.

5. Verfahren gemäß einem der vorstehenden Ansprüche, wobei das Entfernen der schmelzgeschweißten Abschnitte durch Abschneiden, mittels Metallschere, Schneidrad, Drahterodieren, Strahlschneiden, Laserschneiden oder Kombinationen davon erfolgt.

6. Verfahren gemäß einem der vorstehenden Ansprüche, wobei das Kugelstrahlmittel ausgewählt ist aus der Gruppe bestehend aus Glaskügelchen, Keramikkügelchen oder Stahlschrot.

7. Verfahren gemäß einem der vorstehenden Ansprüche, wobei der Kugelstrahlschritt über einen Zeitraum im Bereich von ungefähr 5 bis 60 sec/cm² durchgeführt wird.

8. Verfahren gemäß einem der vorstehenden Ansprüche, wobei das Schmelzschweißen am Umfang der Ränder nur an einer der Seiten des Flächenmaterials durchgeführt wird.

9. Verfahren gemäß einem der vorstehenden Ansprüche, wobei das Schweißverbinden durch ein Pressschweißverfahren auf einer Basis (10) durchgeführt wird, die vorgewärmt wurde, und wobei mindestens ein Metalllagenabschnitt (1, 4) auf der Basis (10) ruht.

10. Verfahren nach Anspruch 9, wobei die Basis (10) auf 300 bis 600 °C vorgewärmt ist, vorzugsweise auf 350 bis 550 °C, mehr bevorzugt auf 400 bis 500 °C.

11. Verfahren gemäß einem der vorstehenden Ansprüche, wobei das Pressschweißen von einer Seite des Flächenmaterials am schmelzgeschweißten Abschnitt der überlappenden Ränder durchgeführt wird und entlang der Ränder zu der gegenüberliegenden Seite des Flächenmaterials fortgesetzt wird.

12. Verfahren gemäß einem der vorstehenden Ansprüche, wobei das Pressschweißen von einem Abstand von ungefähr der halben Strecke zwischen den zwei Seiten des Flächenmaterials durchgeführt wird und entlang der überlappenden Ränder zu einer Seite des Flächenmaterials und anschließend von dem Abstand von ungefähr der halben Strecke zur gegenüberliegenden Seite des Flächenmaterials durchgeführt wird.

## Revendications

1. Procédé de production d'un article soudé d'un matériau de feuille d'un alliage à base de platine renforcé par dispersion comprenant les étapes de
- fourniture d'au moins un élément (1, 4) de matériau de feuille d'un alliage à base de platine renforcé par dispersion ;
- chevauchement des bords à relier par soudage ;
- soudage par fusion des bords de chevauchement dudit alliage à base de platine renforcé par dispersion seulement au niveau de la périphérie desdits bords ;
- liaison par soudage du matériau de feuille en platine par un procédé de soudage à compression, afin de produire la soudure ;
- élimination des parties de soudage par fusion sur la périphérie de l'article soudé,
**caractérisé en ce que** l'étape de soudage par fusion est un soudage par TIG (soudage par gaz inerte au tungstène), le soudage par TIG comprenant les étapes suivantes : a. ajuster la puissance du soudage par TIG pour minimiser l'apport d'énergie pour la soudure ; b. mettre en contact ladite soudure avec une composition de gaz pour optimiser l'extinction rapide de la soudure ; c. mettre en contact ladite soudure avec un deuxième gaz, le contact se faisant essentiellement sur la surface de dessous de ladite soudure, de sorte que la surface de dessous de la soudure soit éteinte ; d. mettre en contact ladite soudure avec un gaz résiduel afin d'améliorer le refroidissement de la soudure par rapport à celui obtenu par ledit gaz et ledit deuxième gaz.

2. Procédé selon la revendication 1, l'article soudé étant un article tubulaire et les bords à relier appartenant à la même feuille de matériau d'alliage à base de platine (1).

3. Procédé selon l'une quelconque des revendications précédentes, dans lequel ledit alliage à base de platine a une composition essentiellement constituée d'or, d'iridium ou de rhodium, en particulier d'alliages choisis dans le groupe composé de platine pur PtAu5, Ptlr1, PtRh5, PtRh10, PtRh20, Ptlr3, Ptlr5 et de combinaisons de ces derniers.

4. Procédé selon l'une quelconque des revendications précédentes, l'alliage à base de platine étant renforcé par dispersion d'oxyde avec un oxyde provenant du groupe constitué d'oxyde d'yttrium, oxyde de zirconium et mélanges de ces derniers.

5. Procédé selon l'une quelconque des revendications précédentes, dans lequel l'élimination des parties soudées par fusion est réalisée par découpe, cisailles à métaux, roulette de découpe, électroérosion à fil, découpe au jet, découpe laser ou des combinaisons de ces méthodes.

6. Procédé selon l'une quelconque des revendications précédentes, dans lequel ledit milieu du grenaillage est choisi dans le groupe composé de billes de verre, sphères de céramique ou projectiles en acier.

7. Procédé selon l'une quelconque des revendications précédentes dans lequel l'étape de grenaillage est exécutée pendant une période de temps d'environ 5 à 60 s/cm².

8. Procédé selon l'une quelconque des revendications précédentes, dans lequel ledit soudage par fusion à la périphérie desdits bords est réalisé seulement au niveau d'un des côtés du matériau de feuille.

9. Procédé selon l'une quelconque des revendications précédentes, dans lequel la liaison par soudage par un procédé de soudage à compression est réalisée sur une base (10) qui a été préchauffée et dans lequel au moins une partie de feuille en métal (1, 4) repose sur la base (10).

10. Procédé selon la revendication 9, dans lequel la base (10) est préchauffée entre 300 et 600 °C, de préférence entre 350 et 550 °C et idéalement entre 400 et 500 °C.

11. Procédé selon l'une quelconque des revendications précédentes, dans lequel le soudage à compression est réalisé à partir d'un côté du matériau de feuille, au niveau de la partie soudée par fusion des bords se chevauchant et est poursuivi le long des bords vers le côté opposé du matériau de feuille.

12. Procédé selon l'une quelconque des revendications précédentes dans lequel le soudage à compression est réalisé à une distance située environ à mi-chemin entre les deux côtés du matériau de feuille et est poursuivi le long des bords se chevauchant vers un côté du matériau de feuille et ultérieurement depuis ladite distance située environ à mi-chemin jusqu'au côté opposé du matériau de feuille.
